# EUROPEAN PATENT SPECIFICATION

(11) **EP 1 904 246 B1**
(45) Date of publication and mention of the grant of the patent: **15.01.2020**
(21) Application number: 05769404.4
(22) Date of filing: 28.06.2005
(51) Int. Cl.: B22C 9/10, F16D 55/228

(54) **A BODY OF A DISC BRAKE CALIPER, A METHOD FOR CAST MANUFACTURING IT AND A CORE FOR SAID CAST MANUFACTURING METHOD**
SCHEIBENBREMSSATTEL, VERFAHREN ZUM GIESSEN DAVON SOWIE GIESSKERN
CORPS D'ÉTRIER DE FREIN À DISQUE, PROCÉDÉ POUR SA FABRICATION PAR MOULAGE ET NOYAU POUR LEDIT PROCÉDÉ DE FABRICATION PAR MOULAGE

(43) Date of publication of application: 02.04.2008
(73) Proprietor: Freni Brembo S.p.A., 24035 Curno (Bergamo) (IT)
(72) Inventor: GOTTI, Antonio, I-24030 Almenno San Bartolomeo (Bergamo) (IT); CRIPPA, Cristian, I-24031 Almenno San Bartolomeo (Bergamo) (IT)
(74) Representative: Crippa, Paolo Ernesto
(86) International application number: PCT/IT2005/000372
(87) International publication number: WO 2007/000780

(56) References cited:
- EP-A- 1 069 332
- EP-A- 1 462 671
- WO-A-99/20417
- DE-A1- 4 331 622
- GB-A- 1 056 955
- GB-A- 1 387 833
- US-A- 5 518 062
- US-A1- 2004 060 781
- HENTSCHEL P ET AL: "DAS FAHRWERK DES PORSCHE BOXSTER" ATZ AUTOMOBILTECHNISCHE ZEITSCHRIFT, VIEWEG PUBLISHING, WIESBADEN, DE, 1996, pages 34-36,38,40, XP000641513 ISSN: 0001-2785

## Description

**.** According to a first aspect, the object of the present invention is a method for manufacturing a body of a disc brake caliper.

**.** According to a further aspect, the . object of the present invention is a body of a disc brake caliper.

**.** According to a still further aspect, the object of the present invention is a core for cast manufacturing a body of a disc brake caliper.

**.** It is known that the braking hydraulic system of a vehicle also expands inside the caliper body by means of canalizations. Particularly, connecting canalizations are provided between two cylinders belonging to a pair of opposite cylinders being arranged within opposite side portions of the body, respectively. These connecting canalizations pass through connecting portions of the body which connect the side portions to each other.

**.** In the disc brake field, the inner canalizations of a caliper body are usually obtained by means of a drilling machining.

**.** This machining is long and expensive because more positionings of the blank obtained by casting can be required, besides the fact that these holes are somewhat long and of a relatively small diameter.

. These drawbacks are further exacerbated in the case of a body provided as one piece in which several drillings are required, some of which entirely pass through the body, thus requiring a subsequent stopping. The document WO99/20417A shows a brake caliper including distinct protrusions including a first protrusion which produces a bore in the finished caliper and a second protrusion which produces an undercut in the finished caliper, manufactured by casting a shot of a semi-solid thixotropic metal alloy about a core. The document US5,518,062 refers to a method for casting a plurality of caliper forms by using a mold and a core member of a special design.

. Following the above mentioned drawbacks, the unmet need for reducing the times and costs for manufacturing a body of a disc brake caliper, particularly if provided as one piece, has increased in the field.

. Therefore, the problem at the heart of the present invention is to provide a body, a method and a core which have such structural and functional characteristics as to meet said need, while overcoming said drawbacks, mentioned with reference to the prior art.

. This problem is solved by means of a method for manufacturing a body of a disc brake caliper in accordance with claim 1, by means of a body of a disc brake caliper in accordance with claim 8.

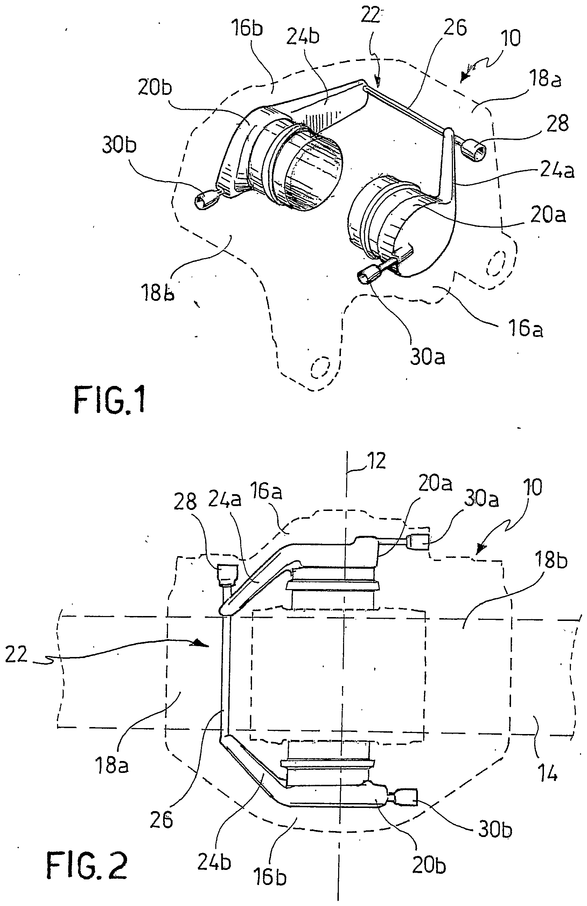

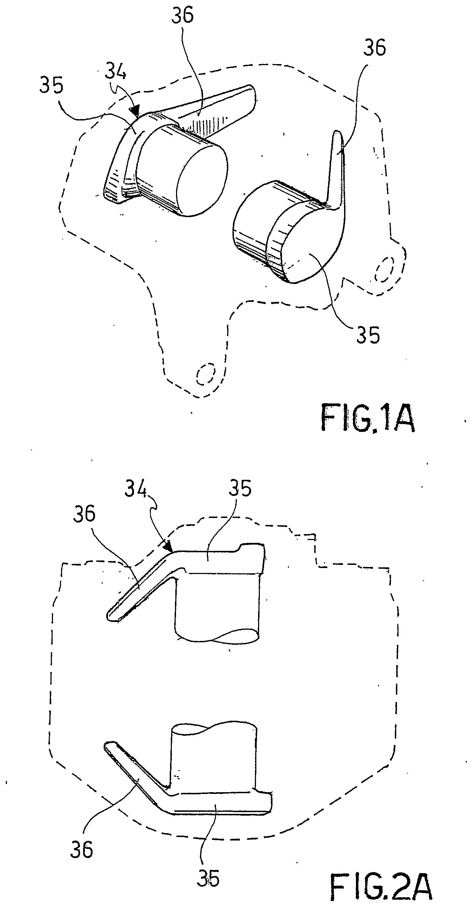

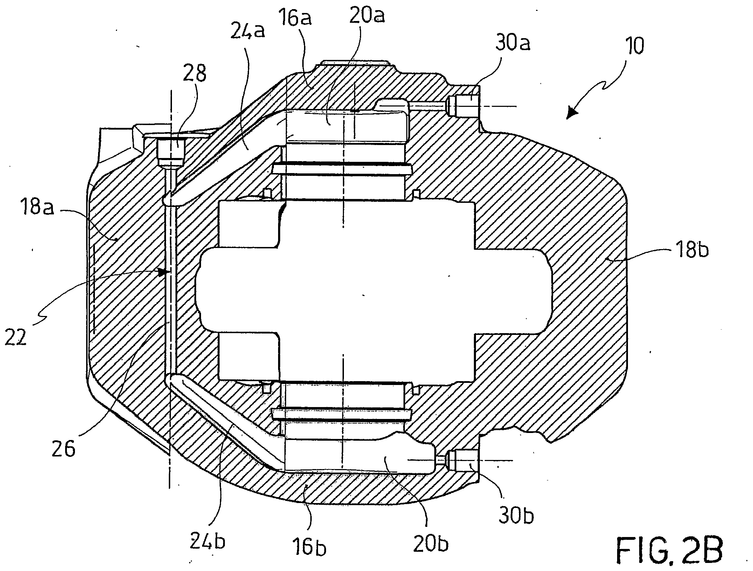

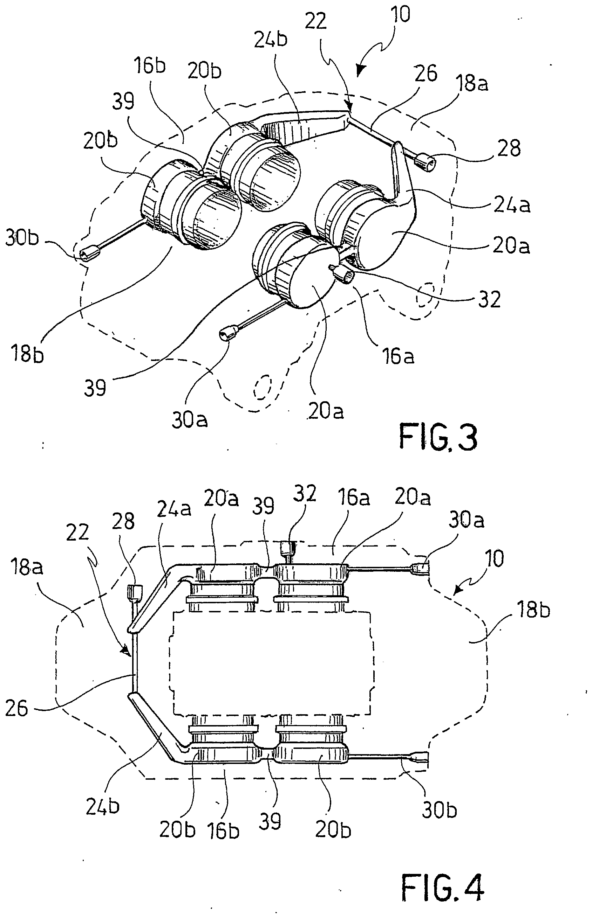

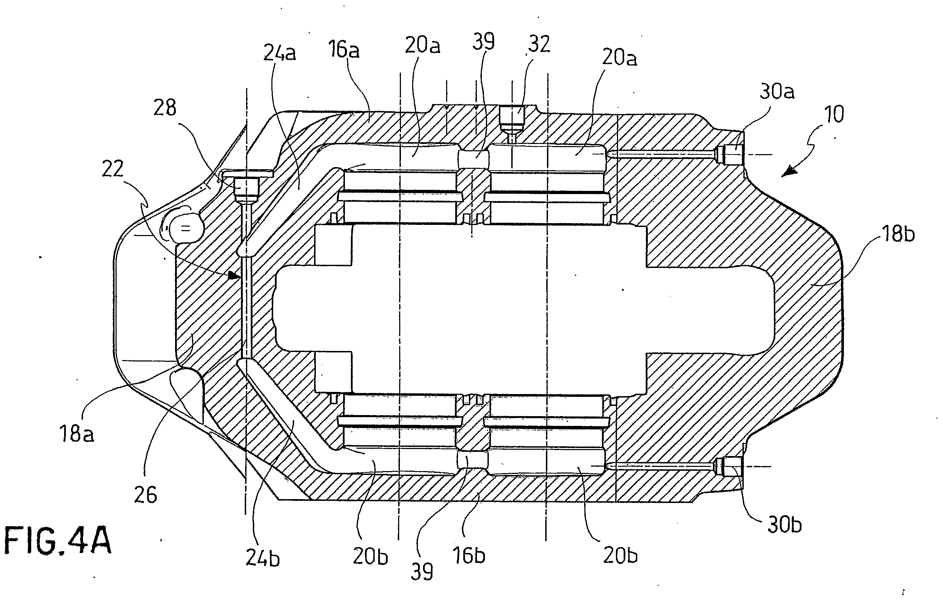

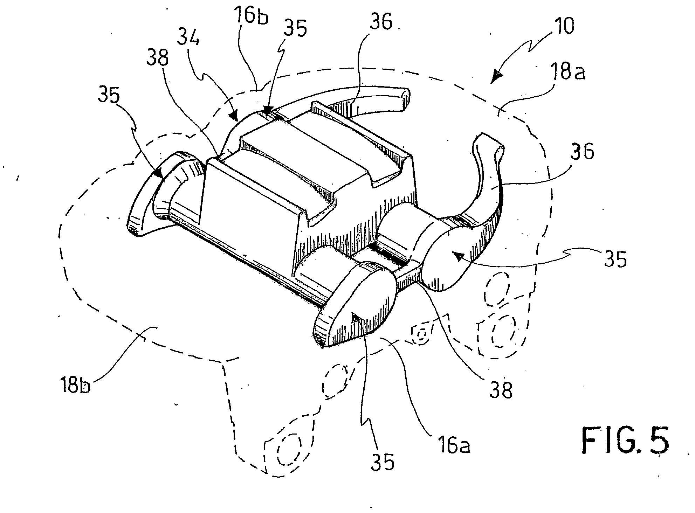

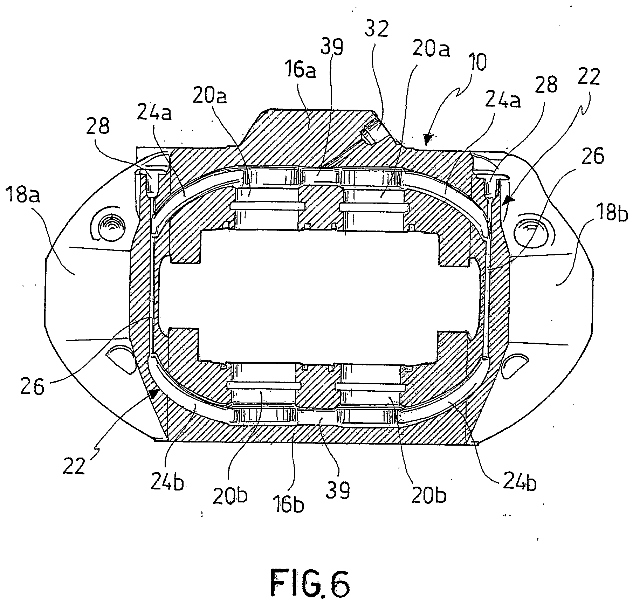

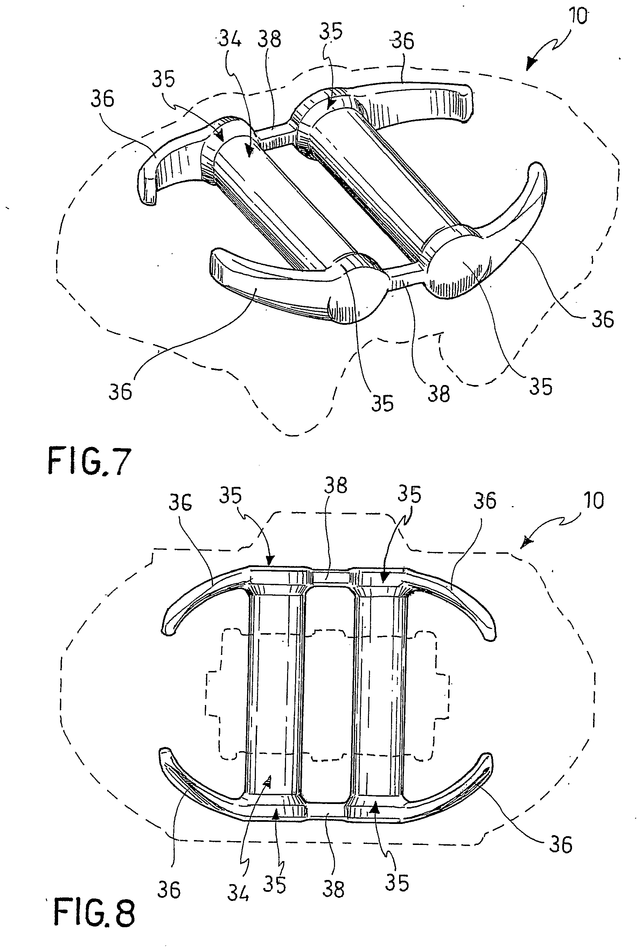

. Further characteristics and the advantages of the body, method and core according to the invention will be understood from the description of preferred exemplary embodiments as set forth herein below, which are given by way of indicative and non-limiting example, with reference to the annexed figures, in which:
. Fig. 1 shows a perspective view of the body of a disc brake caliper according to a possible embodiment of the present invention;
**.** Fig. 1A shows the body from Fig. 1 during the manufacturing step;
**.** Fig. 2 shows a view of the body from Fig. 1 according to a different angle;
**.** Fig. 2A shows the body from Fig. 2 during the manufacturing step;
**.** Fig. 2B shows a sectional scrap view of the body from Figs. 1 and 2;
**.** Fig. 3 shows a perspective view of the body of a disc brake caliper according to a possible embodiment of the present invention;
**.** Fig. 4 shows a view of the body from Fig. 3 according to a different angle;
**.** Fig. 4A shows a sectional scrap view of the body from Figs. 3 and 4;
**.** Fig. 5 shows the body from Fig. 3 during the manufacturing step;
**.** Fig. 6 shows a sectional scrap view of the body of a disc brake caliper according to a possible embodiment of the present invention;
**.** Fig. 7 shows a perspective view of the body from Fig. 6 during the manufacturing step;
**.** Fig. 8 shows a view of the body from Fig. 7 according to a different angle.

. With reference to said figures, a body of a disc brake caliper has been indicated with 10 as a whole. In some figures the body outer edge is illustrated with a dashed line in order to highlight some elements relating to the present invention.

**.** With reference to the following description, with axial is meant a direction being either coincident or parallel to a rotation axis 12 of a disc 14 of the disc brake, illustrated by way of example in Fig. 2. Furthermore, with radial direction is meant a direction being perpendicular to the axial direction.

**.** With reference to Figs. 1 and 2, showing a first possible embodiment of the body according to the present invention, side portions of the body 10 adapted to be arranged along opposite sides of the brake 14 relative to the axial direction 12 have been indicated with 16a and 16b, respectively. Two connecting portions 18a and 18b connect the side portions 16a and 16b to each other along the axial direction 12, such that the caliper body is adapted to be arranged astride of the disc. In the shown example, the connecting portions 18a and 18b are located at the ends of the side portions 16a and 16b. The body 10, and hence the side portions and the connecting portions are made as one piece.

**.** Generally, the side portions of a caliper body are adapted to house respective pads, not shown, and corresponding pistons, also not shown, being adapted to exert a braking pressure on the pads. With reference to Figs. 1 and 2, each side portion of the body comprises its respective cylinder adapted to accommodate a piston and belonging to a braking hydraulic system working by means of a braking fluid. In the Figs. 1 and 2 the body has been illustrated with a dashed line, whereas the part of the braking system inside the caliper body has been illustrated with a continuous line.

**.** Particularly, a first cylinder of a pair of opposite cylinders has been indicated with 20a, whereas a second cylinder of the pair of opposite cylinders has been indicated with 20b. With the definition "pair of opposite cylinders" is meant a first and second cylinders belonging to a side portion of the body, respectively, and substantially acting along the same axial direction.

**.** In Figs. 1 and 2 the first cylinder 20a and the second cylinder 20b of the pair of opposite cylinders are connected to each other by means of a connecting canalization 22 extending through the side portions 16a and 16b and one of the connecting portions, for example the one indicated with the reference 18a.

**.** In a caliper body being cast manufactured by casting a material into a mould, the cylinders are obtained by trimming notches being directly obtained by the casting, i.e. into the blank body.

**.** With particular reference to Figs. 1 and 2, besides the two notches corresponding to the two opposite cylinders 20a and 20b, two side lengths 24a and 24b of the connecting canalization 22 extending between a cylinder and the body connecting portion, respectively, are also advantageously provided during the casting step, preferably as one piece with the caliper body, simultaneously to the manufacturing of the notches corresponding to the cylinders. Preferably, the side lengths 24a and 24b correspond to the connecting canalization lengths passing through the body side portions.

**.** Advantageously, the notches corresponding to the first and second cylinders of the pair of opposite cylinders are provided by means of one single core 34 partially illustrated in Figs. 1A and 2A. Each of the two side lengths 24a and 24b of the connecting canalization 22 is provided by means of a projection 36 of the core extending between an area 35 of the core intended to provide the corresponding notch and at least one area of the mould intended to provide the body connecting portion.

**.** With reference to Figs. 1A and 2A, the body has been illustrated with a dashed line, whereas two portions of the core 34 have been illustrated with a continuous line. The remaining portion of the core 34, not shown, corresponds to a central portion which can be adapted to provide the body empty portion being located between the two connecting portions 18a and 18b, for example as a function of the requirements for manufacturing the chills.

**.** In addition to what has been stated above, with reference to Figs. 1 and 2, the connecting canalization 22 comprises a connecting length 26 provided by means of a machine tool-drilling which makes the connecting canalization 22 complete. Advantageously, the connecting length 26 connects the two side lengths 24a and 24b of the connecting canalization 22 being obtained while casting and extending between each cylinder of the pair of opposite cylinders and the body connecting portion to each other. Preferably, one single connecting length adapted to connect the two side lengths to each other is provided. In other words, the two side lengths preferably extend up to corresponding end areas which can be connected to each other by means of one single connecting length being manufactured by drilling.

**.** In accordance with an embodiment, the connecting length 26 being manufactured by drilling passes through a body connecting portion in order to make the connecting canalization 22 complete.

**.** Advantageously, the connecting length 26 connects the two side lengths 24a and 24b of the connecting canalization to each other and passes through them at their respective ends being opposite to their respective cylinders.

**.** With reference to Figs. 1 and 2, the connecting length 26 is provided from a side portion 16a, passes through a first side length 24a corresponding to the body side portion from which the drilling begins, and ends at the, other side length 24b corresponding to the opposite side portion 16b.

**.** The connecting length 26 comprises at least one extension 28 obtained during the drilling machining step. In the example illustrated in Figs. 1 and 2, the extension 28 is used as an inlet of the portion of the hydraulic system inside the caliper body, connected to the main hydraulic system of the vehicle. According to an embodiment not shown (for example similar to the one illustrated in Figs. 3 and 4), a different inlet can be provided, for example located at one of the cylinders, with the consequence that the extension 28 is stopped subsequently to the manufacturing thereof.

**.** In order to make the hydraulic system complete inside the body, the two cylinders 20a and 20b are connected to each other outside the body by means of two respective end extensions 30a and 30b, being obtained by drilling. In the case illustrated in Figs. 1 and 2 in which the inlet of the hydraulic system portion inside the caliper body is formed by the extension 28, the two end extensions 30a and 30b are preferably stopped by bleed plugs. According to a different embodiment not shown, in the case where an inlet being different from the extension 28 is provided, for example provided by means of an intermediate extension located at the cylinder 20a, the end extension 30a near the cylinder 20a and the intermediate extension is preferably provided with a stopper, whereas the end extension 30b far from the cylinder 20a and the intermediate extension is preferably provided with a bleed plug.

**.** It is understood that variants and/or additions to what has been described and illustrated above can be provided. For example connecting portions can be provided in a number and an arrangement being different from what has been illustrated in Figs. 1 and 2 (either one single connecting portion or more than two connecting portions).

**.** Cylinders in a number and an arrangement being different from what has been illustrated in Figs. 1 and 2 can be further provided. Some examples correspond to the following embodiments.

**.** In accordance with a possible embodiment, at least one notch corresponding to one cylinder of the pair of opposite cylinders and at least one side length of the connecting canalization extending between this cylinder and the body connecting portion are provided during the body casting step. In the case where one single side length of the connecting canalization is directly provided in the blank obtained by casting, the core adapted to provide the two notches corresponding to the two opposite cylinders may be provided with one single projection.

**.** Optionally, a core for each cylinder can be used by providing a projection for each core in the case where both side lengths 24a and 24b are simultaneously provided as described above. Alternatively, a core is provided with a projection in order to provide one of the two side lengths, whereas the opposite core will have a shape being adapted to provide the only notch corresponding to the cylinder.

**.** By providing one single side length being provided during the body blank casting, there can be advantageously provided that this side length extends up to an end area adapted to allow the connection to the opposite cylinder to be provided by means of one single drilling operation.

**.** In accordance with a possible embodiment, the body is made as two pieces being coupled with each other. Each piece preferably corresponds to a side portion and a length of the connecting portions.

**.** Figs. 3-5 correspond to a possible embodiment of the present invention. Figs. 3 and 4 are similar to Figs. 1 and 2 of the embodiment described above. In other words, the body has been illustrated with a dashed line, whereas the part of the braking system inside the caliper body has been illustrated with a continuous line. On the contrary, Fig. 5 shows a perspective view of the core (continuous line) used for manufacturing the body (dashed line) according to the embodiment from Figs. 3 and 4. In other words, Fig. 5 shows the volume within the mould into which the material is cast in order to form the body blank and the position of its respective core therein.

**.** The elements in common with the embodiment described above have been indicated with the same reference numbers. The disc and its respective axial direction have not been illustrated in Figs. 3-5, but are similar to what has been shown in Fig. 2.

**.** Such as described above, even the embodiment from Figs. 3-5 comprises side portions 16a and 16b adapted to be arranged along opposite sides of the disc relative to the axial direction. Two connecting portions 18a and 18b connect the side portions 16a and 16b to each other along the axial direction, such that the caliper body is adapted to be arranged astride of the disc. The body 10, and hence the side portions and the connecting portions, are made as one piece.

**.** With reference to Figs. 3-5, the main difference compared to the embodiment described above is that each side portion of the body comprises two cylinders, each of which is adapted to accommodate a piston. Consequently, the body 10 comprises two pairs of opposite cylinders. Each pair comprises a first cylinder 20a and a second cylinder 20b belonging to opposite side portions, respectively.

**.** Figs. 3 and 4 show a body in which the cylinders of a pair of opposite cylinders are connected to each other by means of the connecting canalization 22 extending through the side portions 16a and 16b and one of the connecting portions, for example the one indicated with the reference 18a. The cylinders of the other pair are not directly connected to each other, but two respective end extensions 30a and 30b are provided, being obtained by drilling.

**.** In addition compared to the embodiment shown in Figs. 1 and 2, an intermediate extension 32 can be optionally provided, also obtained by drilling. In this case, the intermediate extension 32 preferably forms the inlet of the hydraulic system portion inside the caliper body, connected to the main hydraulic system of the vehicle whereas the extension 28 is stopped subsequently to the manufacturing thereof. According to an embodiment not shown (for example similar to the one illustrated in Figs. 1 and 2), the intermediate extension 32 may not be provided, or can be stopped by means of a stopper, and the extension 28 is used as an inlet of the hydraulic system portion inside the caliper body, connected to the main hydraulic system of the vehicle.

**.** As described above, in the case where the intermediate extension 32 forms the inlet of the hydraulic system portion inside the caliper body, the end extension 30a, near the cylinder 20a and the intermediate extension 32, is preferably provided with a stopper whereas the end extension 30b, far from the cylinder 20a and the intermediate extension 32, is preferably provided with a bleed plug. According to a different embodiment in which the inlet is formed by the extension 28 (both in the case where the intermediate extension 32 is provided, being thus stopped, and the case where the intermediate extension 32 is not provided), the two end extensions 30a and 30b are preferably stopped by bleed plugs.

**.** With particular reference to Figs. 3-5, besides the notches corresponding to the opposite cylinders 20a and 20b (four notches), two side lengths 24a and 24b of the same connecting canalization 22 which extend between a cylinder of a pair of opposite cylinders connected to each other and the body connecting portion, respectively, are also advantageously provided during the casting step of the caliper body as one piece.

**.** Particularly, the notches corresponding to the first and second cylinders of the pairs of opposite cylinders are provided by means of one single core 34, illustrated in Fig. 5. The areas of the core 34 adapted to provide the notches corresponding to the body cylinders have been indicated with 35. Core projections extending between a core area intended to provide the corresponding notch of opposite cylinders, being connected to each other through the connecting portion, and at least one mould area intended to provide the body connecting portion have been indicated with 36.

**.** Core intermediate elements adapted to provide a connection 39 between two cylinders of the same body side portion have been indicated with 38.

. As described above, the connecting length 26 provided by means of a machine tool-drilling connects the two side lengths 24a and 24b of the connecting canalization 22 being obtained while casting to each other. As described above, one single connecting length adapted to connect the two side lengths to each other is preferably provided. In other words, the two side lengths preferably extends up to corresponding end areas which can be connected to each other by means of one single connecting length being obtained by drilling.

**.** In accordance with an embodiment, the connecting length 26 manufactured by drilling passes through a body connecting portion in order to make the connecting canalization 22 complete.

**.** Advantageously, the connecting length 26 connects the two side lengths 24a and 24b of the connecting canalization to each other and passes through them at their respective ends being opposite to their respective cylinders.

**.** Such as described above, the connecting length 26 is provided from a side portion 16a, passes through a first side length 24a corresponding to the body side portion from which the drilling begins, and ends at the other side length 24b corresponding to the opposite side portion 16b. Therefore, the connecting length 26 comprises at least one extension 28 obtained during the drilling machining step such as described above.

**.** The remaining parts of the core 34 are for example adapted to provide either the body opening or the pad housing.

**.** It is understood that variants and/or additions to what has been described and illustrated above can be provided. For example connecting portions can be provided in a number and an arrangement being different from what has been illustrated in Figs. 3-5 (either one single connecting portion or more than two connecting portions).

. Cylinders in a number and an arrangement being different from what has been illustrated in Figs. 3-5 can be further provided.

**.** In accordance with a possible variant embodiment, at least one notch corresponding to one cylinder of the pair of opposite cylinders, being connected to each other through the connecting portion, and at least one side length of the connecting canalization extending between this cylinder and the body connecting portion are provided during the body casting step. In the case where one single side length of the connecting canalization is directly provided in the blank obtained by casting, the core adapted to provide the notches corresponding to the opposite cylinders may be provided with one single projection.

**.** Optionally, a core for each cylinder of the pairs of opposite cylinders can be used, by providing a projection for each core adapted to provide the notches corresponding to opposite cylinders being connected to each other, in the case where both side lengths 24a and 24b are simultaneously provided such as described above. Alternatively, a core is provided with one projection in order to provide one of the two side lengths whereas the opposite core will have a shape being adapted to provide the only notch corresponding to the cylinder.

**.** Optionally, the use of two cores can be provided, each of which is adapted to provide a pair of opposite cylinders. In this case the projections (or the at least one projection) are provided in the core adapted to provide the notches of opposite cylinders being connected to each other.

**.** Such as described above, by providing one single side length being provided during the body blank casting, there can be advantageously provided that this side length extends up to an end area adapted to allow the connection to the opposite cylinder to be provided by means of one single drilling operation.

**.** In accordance with a possible embodiment, the body is made as two pieces being coupled with each other. Each piece preferably corresponds to a side portion and a length of the connecting portions.

**.** Finally, Figs. 6-8 show a further embodiment of the present invention. Fig. 6 corresponds to a sectional scrap view of the body 10 so as to show the braking hydraulic system therein. On the contrary, Figs. 7 and 8 show a plan perspective view of the core (continuous line) used for manufacturing the body (dashed line) according to the embodiment from Fig. 6. In other words, Figs 7 and 8 show the volume within the mould into which the material is cast in order to form the body blank and the position of its respective core therein.

**.** The elements in common with the embodiments described above have been indicated with the same reference numbers. The disc and its respective axial direction have not been illustrated in Figs. 6-8, but are similar to what has been illustrated in Fig. 2.

**.** The body from Fig. 6 is similar to the one from Figs. 3 and 4, by providing two pairs of opposite cylinders. Unlike the above embodiment, the cylinders of each pair of opposite cylinders are directly connected to each other by means of a respective connecting canalization 22. Particularly, each pair of opposite cylinders is connected to the other by means of a connecting canalization through its respective body connecting portion.

**.** With particular reference to Figs. 6-8, besides the notches corresponding to the opposite cylinders 20a and 20b (four notches), two pairs of side lengths 24a and 24b of their respective connecting canalizations 22 extending between a cylinder and the body connecting portion, respectively, are also advantageously provided during the casting step of the caliper body as one piece.

**.** Particularly, the notches corresponding to the body cylinders are provided by means of one single core 34, shown in Figs. 7 and 8. The areas of the core 34 adapted to provide the notches corresponding to the body cylinders have been indicated with 35. The core projections extending between a core area intended to provide the corresponding notch of opposite cylinders being connected to each other through the connecting portion and at least one mould area intended to provide the body connecting portion have been indicated with 36.

**.** Core intermediate elements adapted to provide a connection 39 between two cylinders of the same body side portion have been indicated with 38. Such as above, a further intermediate extension 32 can be optionally provided, obtained by drilling, for example opening to the outside from one of the cylinders.

**.** In accordance with what has been illustrated in Fig. 6, a connecting length 26 provided by means of a machine-tool drilling is provided, which connects each pair of side lengths 24a and 24b of each connecting canalization 22 to the other, obtained while casting. Such as described above, for each pair of side lengths 24a and 24b is preferably provided one single connecting length adapted to connect the two side lengths to each other. In other words, the two side lengths of each pair preferably extend up to corresponding end areas which can be connected to each other by means of one single drilled connecting length.

**.** In accordance with an embodiment, the connecting length 26 manufactured by drilling passes through a body connecting portion in order to make its respective connecting canalization 22 complete.

**.** Advantageously, the connecting length 26 connects the two side lengths 24a and 24b of a pair to each other and passes through them at their respective ends being opposite to their respective cylinders.

**.** Such as described above, the connecting length 26 is provided from a side portion 16a, passes through a first side length 24a corresponding to the body side portion from which the drilling begins, and ends at the other side length 24b corresponding to the opposite side portion 16b. Each connecting length 26 comprises at least one extension 28 being obtained during the drilling machining step.

**.** In the assembling position on the vehicle, the caliper is usually tilt arranged such that an extension 28 is located at a height from the ground which is higher than the other extension 28. In the case where the intermediate extension 32 forms the inlet of the hydraulic system portion inside the caliper body, one of the two extensions 28 is provided with a bleed plug (the extension adapted to be arranged at a higher height from the ground in the assembling position of the caliper on the vehicle) whereas the other extension 28 is stopped by a stopper (the extension adapted to be arranged at a lower height from the ground in the assembling position of the caliper on the vehicle). In a different embodiment, in which the intermediate extension 32 is either stopped or not provided, the extension 28 adapted to be arranged at a lower height from the ground in the assembling position of the caliper on the vehicle forms the inlet of the hydraulic system portion inside the caliper body whereas the other extension 28 (the extension adapted to be arranged at a higher height from the ground in the assembling position of the caliper on the vehicle) is stopped by a bleed plug.

**.** It is understood that variants and/or additions to what has been described and illustrated above can be provided. For example connecting portions can be provided in a number and an arrangement being different from what has been illustrated in Figs. 6-8 (either one single connecting portion or more than two connecting portions).

**.** Cylinders in a number and an arrangement being different from what has been illustrated in Figs. 6-8 can be further provided.

**.** In accordance with a possible embodiment, there can be provided that for each connecting canalization 22 one single side length directly provided in the blank while casting is provided. In this case, the core comprises two projections 36 each of which is adapted to provide a side length of a connecting canalization. Otherwise, there can be provided that one single connecting canalization comprises a side length directly provided in the blank while casting. In this case, the core comprises a projection 36 being adapted to provide this side length.

**.** Optionally, the use of two cores, each of which is adapted to provide a pair of opposite cylinders can be provided. Each core may comprise either one or two projections 36 as a function of the side lengths to be provided.

**.** Optionally, a core for each cylinder of a pair of opposite cylinders being connected to each other can be used, by providing a projection for each core in the case where both side lengths 24a and 24b are simultaneously provided such as described above. Alternatively, a core is provided with one projection in order to provide one of the two side lengths whereas the opposite core will have a shape being adapted to provide the only notch corresponding to the cylinder.

**.** Such as described above, by providing one single side length being provided during the body blank casting, there can be advantageously provided that this side length extends up to an end area adapted to allow the connection to the opposite cylinder to be provided by means of a single drilling operation.

**.** In accordance with a possible embodiment, the body is made as two pieces being coupled with each other. Each piece preferably corresponds to a side portion and a length of the connecting portions.

**.** Therefore, in general terms, the present invention relates to a body 10 of a disc brake caliper comprising side portions 16a, 16b adapted to be arranged along opposite sides of the disc 14 relative to an axial direction 12 of the same disc and at least one connecting portion 18a, 18b connecting the side portions to each other along said axial direction. The side portions 16a, 16b comprise a first cylinder 20a and a second cylinder 20b, respectively, of at least a pair of opposite cylinders being connected to each other by means of a connecting canalization 22 extending through the side portions and the at least one connecting portion. At least one notch corresponding to one cylinder of the pair of opposite cylinders and at least one side length of the connecting canalization extending between this cylinder and the body connecting portion are provided during the body casting step. This notch corresponding to one cylinder of the pair of opposite cylinders is provided by means of a core and at least this side length of the connecting canalization extending between this cylinder and the body connecting portion is provided by means of a core projection extending between an area being intended to provide this notch and at least an area being intended to provide the body connecting portion.

**.** Preferably, the caliper body comprising the side portions and the at least one connecting portion is made as one piece.

**.** Preferably, both the side length of the connecting canalization extending between the first cylinder of the pair of opposite cylinders and the body connecting portion, and the side length of the connecting canalization extending between the second cylinder of the pair of opposite cylinders and the body connecting portion are provided during the casting step of the caliper body as one piece. In this case, a single core adapted to provide the two notches and, by means of two projections, the two side lengths can be provided. The connecting canalization comprises a connecting length. being provided by means of a machine tool-drilling which connects the two side lengths of the connecting canalization to each other being obtained while casting and extending between each cylinder of the pair of opposite cylinders and the body connecting portion. Preferably, the connecting length being manufactured by drilling passes through the body connecting portion. Moreover, the connecting length being manufactured by drilling connects the two side lengths of the connecting canalization to each other being obtained while casting and extending between each cylinder and the body connecting portion and passes through them at their respective ends being opposite to their respective cylinders.

**.** By providing at least two first cylinders and at least two second cylinders of respective at least two pairs of opposite cylinders, it is either possible that one single pair of opposite cylinders is connected to the other by means of the connecting canalization or that at least two pairs axe connected to each other by means of respective connecting canalizations. In this case, each connecting canalization may be provided such as described above or according to one of the described variants.

**.** According to an aspect, the present invention relates to a method for manufacturing a body 10 of a disc brake caliper. The body comprises side portions 16a, 16b adapted to be arranged along opposite sides of the disc 14 relative to an axial direction 12 of the same disc and at least one connecting portion 18a, 18b connecting the side portions to each other along the axial direction. The side portions comprise a first cylinder 20a and a second cylinder 20b, respectively, of at least one pair of opposite cylinders being connected to each other by means of a connecting canalization 22 extending through the side portions and the at least one connecting portion.

**.** In accordance with a possible embodiment, the method comprises a step of cast manufacturing the body 10 of the caliper by casting a material into a mould, thus simultaneously providing at least one notch corresponding to one cylinder of the pair of opposite cylinders and at least a side length 24a, 24b of the connecting canalization extending between this cylinder and the body connecting portion. Preferably, at least one core 34 is inserted into the mould in order to simultaneously provide at least the notch corresponding to one cylinder of said pair of opposite cylinders and at least one side length 24a, 24b of the connecting canalization extending between this cylinder and the body connecting portion. The side length of the connecting canalization is provided by means of a projection 36 of the core 34 extending between a core area being intended to provide said notch and at least one mould area being intended to provide the body connecting portion.

**.** Preferably, the caliper body is manufactured by casting as one piece.

**.** In accordance with an embodiment, for example corresponding to the annexed figures, both the side length 24a of the connecting canalization, extending between the first cylinder 20a of the pair of opposite cylinders and the body connecting portion, and the side length 24b of the connecting canalization, extending between the second cylinder 20b of the pair of opposite cylinders and the body connecting portion, are provided during the step of cast manufacturing the caliper body as one piece. Preferably, the core 34 is adapted to provide the notches corresponding to the pair of opposite cylinders and at least the side lengths 24a and 24b of the connecting canalization which extend between each cylinder and the body connecting portion. Particularly,. each side length 24a, 24b of the connecting canalization is provided by means of one respective projection 36 of the core 34 extending between a core area being intended to provide one respective notch and at least one mould area being intended to provide the body connecting portion.

**.** Advantageously, a step of machine tool-drilling of a connecting length 26 of the connecting canalization 22 is provided, subsequently to the step of cast manufacturing the body. Preferably, the two side lengths 24a and 24b of the connecting canalization which extend between each cylinder of the pair of opposite cylinders and the body connecting portion are then connected to each other by means of a machine tool-drilling in order to make the connecting canalization complete. Preferably, the two side lengths 24a and 24b of the connecting canalization which extend between each cylinder of the pair of opposite cylinders and the body connecting portion are connected to each other by means of a machine tool-drilling which passes through the body connecting portion.

. Furthermore, the two side lengths 24a and 24b of the connecting canalization which extend between each cylinder of the pair of opposite cylinders and the body connecting portion are connected to each other by means of a machine tool-drilling which passes through them at their respective ends being opposite to their respective cylinders.

**.** Such as shown, for example, in Figs. 3-5, the side portions 16a and 16b may comprise at least two first cylinders 20a and at least two second cylinders 20b, respectively, forming at least two pairs of opposite cylinders. At least one first cylinder of a side portion is connected to a second cylinder of the opposite side portion by means of the connecting canalization. A core is inserted into the mould in order to provide the notches corresponding to the cylinders of the side portions and at least a side length of the connecting canalization. This side length of the connecting canalization is provided by means of a projection 36 of the core 34 extending between a core area being intended to provide a notch corresponding to one of the opposite cylinders being connected to each other and at least one mould area being intended to provide the body connecting portion. Preferably, both side lengths of the connecting canalization are provided by means of one respective projection 36 of the core 34 extending between a core area being intended to provide one respective notch corresponding to one of the opposite cylinders being connected to each other and at least one mould area being intended to provide the body connecting portion.

**.** With reference to the embodiment shown in Figs. 6-8, the body comprises two side portions 16a and 16b, at least two connecting portions 18a and 18b and two pairs of opposite cylinders. Each pair of opposite cylinders is connected to the other by means of a connecting canalization 22 which passes through one respective connecting portion 18a and 18b. The core 34 is adapted to provide the notches corresponding to opposite cylinders of the side portions and at least one of the side lengths of respective connecting canalizations which extend between each cylinder of a pair of opposite cylinders being connected to each other and the body connecting portion. Preferably, each side length of the connecting canalization is provided by means of one respective core projection extending between a core area being intended to provide one respective notch corresponding to one cylinder of two opposite cylinders and at least one mould area being destined to provide the body connecting portion. Advantageously, each of the two connecting canalizations 22 comprises two side lengths 24a and 24b, respectively, provided by means of a core projection being inserted into the mould. Optionally, there can be provided that each connecting canalization comprises a side length being provided by means of one respective core projection.

**.** It is understood that variants of the above-mentioned method, for example adapted to provide the possible body variant embodiments described above, can be provided.

**.** In accordance with a further aspect, the present invention relates to a core 34 for cast manufacturing a body 10 of a disc brake caliper comprising at least one area 35 adapted to provide a notch corresponding to one cylinder 20a of a side portion 16a of the body and at least one projection 36 adapted to provide at least one side length 24a of a connecting canalization 22 between said cylinder 20a and a cylinder 20b of an opposite side portion 16b of the caliper body.

**.** The core 34 comprises two areas 35 adapted to provide two opposite notches corresponding to two cylinders 20a, 20b of a pair of opposite cylinders of the body being connected to each other by means of said connecting canalization 22. The core 34 further comprises two projections 36 being opposite to each other adapted to provide a side length 24a, 24b of the connecting canalization 22 between the opposite cylinders.

**.** In accordance with a further embodiment, the core 34 comprises areas adapted to provide notches corresponding to at least two pairs of opposite cylinders 20a, 20b of the body, the cylinders of each pair of opposite cylinders being connected to each other by means of one respective connecting canalization 22. The core further comprises at least four projections 36 (two pairs of projections 36) adapted to provide side lengths of their respective connecting canalizations between the cylinders of a pair of opposite cylinders.

**.** In accordance with a possible embodiment, the core 34 comprising areas adapted to provide notches corresponding to at least two pairs of opposite cylinders 20a, 20b of the body further comprises at least one projection 36 in order to provide at least one side length such as described above. Advantageously, there can be provided that this core comprises two projections 36 adapted to provide their respective side lengths of two different connecting canalizations.

**.** It is understood that variants and/or additions to what has been described and illustrated above can be provided, for example such as described with reference to the caliper body.

**.** For example, the caliper body can be made as two pieces.

**.** Furthermore, pairs of opposite cylinders can be provided in a number and an arrangement being different from what has been illustrated.

**.** For example, one or more body connecting portions can be provided being located at the ends and/or the center of the body side portions.

**.** From what has been stated above, it can be appreciated that the fact of providing a caliper body, a method and a core according to the present invention allows to meet said need for making the manufacturing of the same body simpler and quicker, thus particularly reducing the number of the blank body positionings on the machine tool for the subsequent machining.

**.** Furthermore, considering that each drilling machining is particularly long and expensive especially when holes somewhat long and of a small diameter require to be obtained, hence the present invention allows to reduce the times and costs of the finished piece, thus reducing the number of required holes.

**.** The above-mentioned advantages are further significant in the case of bodies manufactured as one piece, being conventionally subjected to a large number of drillings in order to connect two cylinders of a pair of opposite cylinders to each other. In fact, in the case of the present invention a smaller number of positionings on different equipment can be obtained due to the reduction in the number of required drillings.

**.** Moreover, by reducing the number of drillings entirely passing through the caliper body, the number of the required stopping for the extensions 28 and hence the manufacturing times and costs can be reduced.

**.** To the preferred embodiments of the body, the core and the method described above, those skilled in the art, aiming at satisfying contingent and specific needs, will be able to carry out several modifications, adjustments and replacements of elements with other elements being functionally equivalent thereto, without thereby departing from the scope of the following claims.

## Claims

1. A method for manufacturing a body (10) of a disc brake caliper, said body (10) comprising side portions (16a, 16b) adapted to be arranged along opposite sides of the disc (14) of the disc brake relative to an axial direction (12) of the same disc and at least one connecting portion (18a, 18b) connecting the side portions (16a, 16b) along said axial direction (12), wherein said side portions (16a, 16b) comprise a first cylinder (20a) and a second cylinder (20b), respectively, of at least one pair of opposite cylinders being connected to each other by means of a connecting canalization (22) extending through the at least one connecting portion (18a, 18b),
said method comprising the steps of:
- providing a mould for cast manufacturing the body (10) of the caliper by casting a material into the mould;
- providing at least one core (34) for cast manufacturing a body (10) of a disc brake caliper comprising two areas (35) adapted to provide two opposite notches corresponding to two cylinders (20a, 20b) of a pair of opposite cylinders of the body being connected to each other by means of said connecting canalization (22), the at least one core (34) further comprising two projections (36) being opposite to each other adapted to provide a side length (24a, 24b) of the connecting canalization (22) between the opposite cylinders;
- inserting said at least one core into said mould;
- casting a material into the mould in order to simultaneously providing said notches corresponding to said cylinders (20a, 20b) of the pair of opposite cylinders and said side lengths (24a, 24b) of the connecting canalization (22) extending between this cylinder and the connecting portion (18a, 18b) of the body (10);
- machine tool-drilling of one single connecting length (26) of the connecting canalization (22) provided subsequently to the step of casting the body, for connecting to each other the two side lengths (24a and 24b) of the connecting canalization (22) which extend between each cylinder of the pair of opposite cylinders and the body connecting portion in order to make the connecting canalization complete.

2. The method for manufacturing a body (10) of a disc brake caliper according to claim 1, wherein the body (10) of the caliper is cast manufactured as one piece.

3. The method for manufacturing a body (10) of a disc brake caliper according to claim 1 or 2, wherein the two side lengths (24a, 24b) of the connecting canalization (22) which extend between each cylinder (20a, 20b) of the pair of opposite cylinders and the connecting portion (18a, 18b) of the body (10) are then connected to each other by means of a machine tool-drilling in order to make the connecting canalization (22) complete, and/or wherein the two side lengths (24a, 24b) of the connecting canalization (22) which extend between each cylinder of the pair of opposite cylinders and the connecting portion (18a, 18b) of the body (10) are connected to each other by means of a machine tool-drilling which passes through the connecting portion (18a, 18b) of the body (10), and/or
wherein the two side lengths (24a, 24b) of the connecting canalization (22) which extend between each cylinder of the pair of opposite cylinders and the connecting portion (18a, 18b) of the body (10) are connected to each other by means of a machine tool-drilling which passes through them at their respective ends being opposite to their respective cylinders.

4. The method for manufacturing a body (10) of a disc brake caliper according to one of the preceding claims, wherein said side portions (16a, 16b) comprise at least two first cylinders (20a) and at least two second cylinders (20b), respectively, forming at least two pairs of opposite cylinders, wherein at least one first cylinder (20a) of a side portion (16a) is connected to its respective second cylinder (20b) of the opposite side portion (16b) by means of said connecting canalization (22), and wherein at least one core (34) is inserted into said mould in order to provide the notches corresponding to the cylinders (20a, 20b) of the side portions (16a, 16b) and said at least one side length (24a, 24b) of the connecting canalization (22), said side length of the connecting canalization (22) being provided by means of a projection (36) of said core (34) extending between a core area (35) being intended to provide a notch corresponding to one of the opposite cylinders (20a, 20b) being connected to each other and at least one mould area being intended to provide the connecting portion (18a, 18b) of the body (10).

5. The method for manufacturing a body (10) of a disc brake caliper according to claim 4, wherein at least one core (34) is inserted into said mould in order to provide the notches corresponding to opposite cylinders (20a, 20b) of the side portions (16a, 16b) and both side lengths (24a, 24b) of the connecting canalization (22) which extend between each cylinder (20a, 20b) of a pair of opposite cylinders, being connected to each other, and the connecting portion (18a, 18b) of the body (10), each of said side lengths (24a, 24b) being provided by means of one respective projection (36) of said core (34) extending between a core area (35) being intended to provide one respective notch corresponding to one cylinder (20a, 20b) of a pair of opposite cylinders, being connected to each other, and at least one mould area being intended to provide the connecting portion (18a, 18b) of the body (10).

6. The method for manufacturing a body (10) of a disc brake caliper according to claim 4 or 5, wherein said body (10) comprises two side portions (16a, 16b) and at least two connecting portions (18a, 18b), each pair of opposite cylinders (20a, 20b) being connected to the other by means of one respective connecting canalization (22) passing through a connecting portion (18a, 18b), and wherein said at least one core (34) is adapted to provide said notches corresponding to opposite cylinders of the side portions (16a, 16b) and at least one side length (24a, 24b) of each connecting canalization (22) extending between one respective cylinder (20a, 20b) of a pair of opposite cylinders being connected to each other and the connecting portion (18a, 18b) of the body (10), each side length (24a, 24b) of each connecting canalization (22) being provided by means of one respective projection (36) of said core (34) extending between a core area (35) being intended to provide one respective notch corresponding to one cylinder (20a, 20b) of two opposite cylinders and at least one mould area being intended to provide the connecting portion (18a, 18b) of the body (10) .

7. The method for manufacturing a body (10) of a disc brake caliper according to claim 6, wherein said core (34) is adapted to provide said notches corresponding to said opposite cylinders of the side portions (16a, 16b) and each side length (24a, 24b) of each connecting canalization (22) extending between one respective cylinder (20a, 20b) of a pair of opposite cylinders being connected to each other and the respective connecting portion (18a, 18b) of the body (10), each side length (24a, 24b) of the connecting canalizations (22) being provided by means of one respective projection (36) of said core (34) extending between a core area (35) being intended to provide one respective notch corresponding to one cylinder (20a, 20b) of two opposite cylinders and at least one mould area being intended to provide the connecting portion (18a, 18b) of the body (10).

8. A body (10) of a disc brake caliper comprising side portions (16a, 16b) adapted to be arranged along opposite sides of the disc (14) of the disc brake relative to an axial direction (12) of the same disc and at least one connecting portion (18a, 18b) connecting the side portions (16a, 16b) to each other along said axial direction (12), wherein said side portions (16a, 16b) comprise a first cylinder (20a) and a second cylinder (20b), respectively, of at least one pair of opposite cylinders being connected to each other by means of a connecting canalization (22) extending through the at least one connecting portion (18a, 18b),
wherein at least one notch corresponding to one cylinder (20a, 20b) of the pair of opposite cylinders and at least one side length (24a, 24b) of the connecting canalization (22) extending between this cylinder and the connecting portion (18a, 18b) of the body (10) are simultaneously provided during a step of cast manufacturing the body (10);
comprising the side length (24a) of the connecting canalization (22) extending between the first cylinder (20a) of the pair of opposite cylinders and the connecting portion (18a, 18b) of the body (10), and the side length (24b) of the connecting canalization (22) extending between the second cylinder (20b) of the pair of opposite cylinders and the connecting portion (18a, 18b) of the body (10), wherein said side lengths (24a, 24b) are provided during the step of cast manufacturing the body (10) of the caliper;
wherein the body is **characterized in that** the connecting canalization (22) comprises one single connecting length (26) provided by means of a machine tool-drilling connecting the two side lengths (24a, 24b) of the connecting canalization (22) to each other, being obtained while casting and extending between each cylinder (20a, 20b) of the pair of opposite cylinders and the connecting portion (18a, 18b) of the body (10).

9. The body (10) of a disc brake caliper according to claim 8, wherein the body (10) of the caliper is made as one piece.

10. The body (10) of a disc brake caliper according to claim 9, wherein said notches corresponding to said pair of opposite cylinders (20a, 20b) are provided by means of at least one core (34) and wherein said side lengths (24a, 24b) of the connecting canalization (22) which extend between each cylinder and the connecting portion (18a, 18b) of the body (10) are provided by means of their respective projections (36) of said core (34) which extend between a core area (35) being intended to provide one respective notch and at least one mould area being intended to provide the connecting portion (18a, 18b) of the body (10).

11. The body (10) of a disc brake caliper according to one of claims 8 to 10, wherein said connecting canalization (22) comprises a connecting length (26) being provided by means of a machine tool-drilling.

12. The body (10) of a disc brake caliper according to claim 11, wherein said connecting length (26) being manufactured by drilling passes through the connecting portion (18a, 18b) of the body (10).

13. The body (10) of a disc brake caliper according to claim 8 or 12, wherein said connecting length (26) being manufactured by drilling connects the two side lengths (24a, 24b) of the connecting canalization (22) to each other, being obtained while casting and extending between each cylinder (20a, 20b) and the connecting portion (18a, 18b) of the body (10) and passes through them at their respective ends being opposite to their respective cylinders.

14. The body (10) of a disc brake caliper according to one of claims 11 to 13, wherein said side portions (16a, 16b) comprise at least two first cylinders (20a) and at least two second cylinders (20b), respectively, forming at least two pairs of opposite cylinders, wherein at least one first cylinder (20a) of a side portion (16a) is connected to the corresponding second cylinder (20b) of the opposite side portion (16b) by means of said connecting canalization (22), and wherein the notches corresponding to the cylinders (20a, 20b) of the side portions (16a, 16b) are provided by means of at least one core (34) and at least said side length (24a, 24b) of the connecting canalization (22) is provided by means of a projection (36) of said core (34) extending between a core area (35) being intended to provide a notch corresponding to one of the opposite cylinders, being connected to each other, and at least one mould area being intended to provide the connecting portion (18a, 18b) of the body (10), and/or wherein the notches corresponding to opposite cylinders (20a, 20b) of the side portions (16a, 16b) are provided by means of at least one core (34) and both side lengths (24a, 24b) of the same connecting canalization (22) which extend between each cylinder (20a, 20b) of a pair of opposite cylinders, being connected to each other, and the connecting portion (18a, 18b) of the body (10) are provided by means of one respective projection (36) of said core (34) extending between a core area (35) being intended to provide one respective notch corresponding to one cylinder (20a, 20b) of a pair of opposite cylinders, being connected to each other, and at least one mould area being intended to provide the connecting portion (18a, 18b) of the body (10), and/or
wherein said body (10) comprises two side portions (16a, 16b) and at least two connecting portions (18a, 18b), and wherein the first and second cylinders (20a, 20b) of a first pair of opposite cylinders are connected to each other by means of a connecting canalization (22) passing through a connecting portion (18a) of the body (10) and wherein the first and second cylinders (20a, 20b) of a second pair of opposite cylinders are connected to each other by means of a further connecting canalization (22) passing through a different connecting portion (18a) of the body (10).

15. The body (10) of a disc brake caliper according to claim 14, wherein the notches corresponding to opposite cylinders (20a, 20b) are provided by means of a core (34) and at least one of the side lengths (24a, 24b) of both connecting canalizations (22) extending between each cylinder (20a, 20b) of a pair of opposite cylinders, being connected to each other, and the connecting portion (18a, 18b) of the body (10) are provided by means one respective projection (36) of said core (34) extending between a core area (35) being intended to provide one respective notch corresponding to one cylinder (20a, 20b) of a pair of opposite cylinders and at least one mould area being intended to provide the connecting portion (18a, 18b) of the body (10), and/or .
wherein the notches corresponding to opposite cylinders (20a, 20b) are provided by means of a core (34) and each side length (24a, 24b) of respective connecting canalizations (22) extending between each cylinder (20a, 20b) of a pair of opposite cylinders, being connected to each other, and the connecting portion (18a, 18b) of the body (10) is provided by means of one respective projection (36) of said core (34) extending between a core area (35) being intended to provide one respective notch corresponding to one cylinder (20a, 20b) of a pair of opposite cylinders and at least one mould area being intended to provide the connecting portion (18a, 18b) of the body (10), and/or
wherein each connecting canalization (22) comprises a connecting length (26) provided by means of a machine tool-drilling connecting its respective two side lengths (24a, 24b) of the connecting canalization (22) being obtained while casting and extending between each cylinder (20a, 20b) of a pair of opposite cylinders and the connecting portion (18a, 18b) of the body (10), and/or wherein said connecting length (26) being manufactured by drilling passes through one respective connecting portion (18a, 18b) of the body (10), and/or
wherein each connecting length (26) being manufactured by drilling connects the two side lengths (24a, 24b) of its respective connecting canalization (22) to each other, being obtained while casting and extending between each cylinder (20a, 20b) of a pair of opposite cylinders and the connecting portion (18a, 18b) of the body (10) and passes through them at their respective ends being opposite to their respective cylinders.

## Patentansprüche

1. Verfahren zum Herstellen eines Körpers (10) eines Scheibenbremsensattels, wobei der Körper (10) Seitenabschnitte (16a, 16b), welche dazu eingerichtet sind, entlang gegenüberliegender Seiten der Scheibe (14) der Scheibenbremse relativ zu einer axialen Richtung (12) der gleichen Scheibe angeordnet zu sein, und wenigstens einen Verbindungsabschnitt (18a, 18b) umfasst, welcher die Seitenabschnitte (16a, 16b) entlang der axialen Richtung (12) verbindet, wobei die Seitenabschnitte (16a, 16b) einen ersten Zylinder (20a) bzw. einen zweiten Zylinder (20b) wenigstens eines Paares von gegenüberliegenden Zylindern umfassen, welche miteinander mittels einer Verbindungskanalisation (22) verbunden sind, welche sich durch den wenigstens einen Verbindungsabschnitt (18a, 18b) erstreckt, wobei das Verfahren die Schritte umfasst:
- Bereitstellen einer Form für ein Gießen des Körpers (10) des Sattels durch Gießen eines Materials in die Form;
- Bereitstellen wenigstens eines Kerns (34) für ein Gießen eines Körpers (10) eines Scheibenbremsensattels, umfassend zwei Bereiche (35), welche dazu eingerichtet sind, zwei gegenüberliegende Kerben bereitzustellen, welche zwei Zylindern (20a, 20b) eines Paares von gegenüberliegenden Zylindern des Körpers entsprechen, welche miteinander mittels der Verbindungskanalisation (22) verbunden sind, wobei der wenigstens eine Kern (34) ferner zwei Vorsprünge (36) umfasst, welche einander gegenüberliegend dazu eingerichtet sind, eine Seitenlänge (24a, 24b) der Verbindungskanalisation (22) zwischen den gegenüberliegenden Zylindern bereitzustellen;
- Einsetzen des wenigstens einen Kerns in die Form;
- Gießen eines Materials in die Form, um gleichzeitig die Kerben bereitzustellen, welche den Zylindern (20a, 20b) des Paares von gegenüberliegenden Zylindern entsprechen, und die Seitenlängen (24a, 24b) der Verbindungskanalisation (22) bereitzustellen, welche sich zwischen diesem Zylinder und dem Verbindungsabschnitt (18a, 18b) des Körpers (10) erstrecken;
- Maschinenbohren einer einzelnen Verbindungslänge (26) der Verbindungskanalisation (22), welche nachfolgend dem Schritt eines Gießens des Körpers bereitgestellt wird, um die beiden Seitenlängen (24a und 24b) der Verbindungskanalisation (22) zu verbinden, welche sich zwischen jedem Zylinder des Paares von gegenüberliegenden Zylindern und dem Körper-Verbindungsabschnitt erstrecken, um die Verbindungskanalisation abzuschließen.

2. Verfahren zum Herstellen eines Körpers (10) eines Scheibenbremsensattels nach Anspruch 1, wobei der Körper (10) des Sattels als ein Stück gegossen wird.

3. Verfahren zum Herstellen eines Körpers (10) eines Scheibenbremsensattels nach Anspruch 1 oder 2, wobei die beiden Seitenlängen (24a, 24b) der Verbindungskanalisation (22), welche sich zwischen jedem Zylinder (20a, 20b) des Paares von gegenüberliegenden Zylindern und dem Verbindungsabschnitt (18a, 18b) des Körpers (10) erstrecken, dann miteinander mittels eines Maschinenbohrens verbunden werden, um die Verbindungskanalisation (22) abzuschließen, und/oder
wobei die beiden Seitenlängen (24a, 24b) der Verbindungskanalisation (22), welche sich zwischen jedem Zylinder des Paares von gegenüberliegenden Zylindern und dem Verbindungsabschnitt (18a, 18b) des Körpers (10) erstrecken, miteinander mittels eines Maschinenbohrens verbunden werden, welches durch den Verbindungsabschnitt (18a, 18b) des Körpers (10) hindurch tritt, und/oder
wobei die beiden Seitenlängen (24a, 24b) der Verbindungskanalisation (22), welche sich zwischen jedem Zylinder des Paares von gegenüberliegenden Zylindern und dem Verbindungsabschnitt (18a, 18b) des Körpers (10) erstreckt, miteinander mittels eines Maschinenbohrens verbunden werden, welches durch sie an ihren entsprechenden Enden hindurch tritt, welche zu ihren entsprechenden Zylindern gegenüberliegend sind.

4. Verfahren zum Herstellen eines Körpers (10) eines Scheibenbremsensattels nach einem der vorhergehenden Ansprüche, wobei die Seitenabschnitte (16a, 16b) wenigstens zwei erste Zylinder (20a) bzw. wenigstens zwei zweite Zylinder (20b) umfassen, welche wenigstens zwei Paare von gegenüberliegenden Zylindern bilden, wobei wenigstens ein erster Zylinder (20a) eines Seitenabschnitts (16a) mit seinem entsprechenden zweiten Zylinder (20b) des gegenüberliegenden Seitenabschnitts (16b) mittels der Verbindungskanalisation (22) verbunden wird, und wobei wenigstens ein Kern (34) in die Form eingeführt wird, um die Kerben, welche den Zylindern (20a, 20b) der Seitenabschnitte (16a, 16b) entsprechen, und die wenigstens eine Seitenlänge (24a, 24b) der Verbindungskanalisation (22) bereitzustellen, wobei die Seitenlänge der Verbindungskanalisation (22) mittels eines Vorsprungs (36) des Kerns (34) bereitgestellt wird, welcher sich zwischen einem Kernbereich (35), welcher dazu bestimmt ist, eine Kerbe bereitzustellen, welche einem der gegenüberliegenden Zylinder (20a, 20b) entspricht, welche miteinander verbunden werden, und wenigstens einem Formbereich erstreckt, welcher dazu bestimmt ist, den Verbindungsabschnitt (18a, 18b) des Körpers (10) bereitzustellen.

5. Verfahren zum Herstellen eines Körpers (10) eines Scheibenbremsensattels nach Anspruch 4, wobei wenigstens ein Kern (34) in die Form eingeführt wird, um die Kerben, welche gegenüberliegenden Zylindern (20a, 20b) der Seitenabschnitte (16a, 16b) entsprechen, und beide Seitenlängen (24a, 24b) der Verbindungskanalisation (22) bereitzustellen, welche sich zwischen jedem Zylinder (20a, 20b) eines Paares von gegenüberliegenden Zylindern, welche miteinander verbunden werden, und dem Verbindungsabschnitt (18a, 18b) des Körpers (10) erstreckt, wobei jede der Seitenlängen (24a, 24b) mittels eines entsprechenden Vorsprungs (36) des Kerns (34) bereitgestellt wird, welcher sich zwischen einem Kernbereich (35), welcher dazu bestimmt ist, eine entsprechende Kerbe bereitzustellen, welche einem Zylinder (20a, 20b) eines Paares von gegenüberliegenden Zylindern entspricht, welche miteinander verbunden werden, und wenigstens einem Formbereich erstreckt, welcher dazu bestimmt ist, den Verbindungsabschnitt (18a, 18b) des Körpers (10) bereitzustellen.

6. Verfahren zum Herstellen eines Körpers (10) eines Scheibenbremsensattels nach Anspruch 4 oder 5, wobei der Körper (10) zwei Seitenabschnitte (16a, 16b) und wenigstens zwei Verbindungsabschnitte (18a, 18b) umfasst, wobei jedes Paar von gegenüberliegenden Zylindern (20a, 20b) miteinander mittels einer entsprechenden Verbindungskanalisation (22) verbunden wird, welche durch einen Verbindungsabschnitt (18a, 18b) hindurch tritt, und wobei der wenigstens eine Kern (34) dazu eingerichtet ist, die Kerben, welche gegenüberliegenden Zylindern der Seitenabschnitte (16a, 16b) entsprechen, und wenigstens eine Seitenlänge (24a, 24b) von jeder Verbindungskanalisation (22) bereitzustellen, welche sich zwischen einem entsprechenden Zylinder (20a, 20b) eines Paares von gegenüberliegenden Zylindern, welche miteinander verbunden werden, und dem Verbindungsabschnitt (18a, 18b) des Körpers (10) erstreckt, wobei jede Seitenlänge (24a, 24b) von jeder Verbindungskanalisation (22) mittels eines entsprechenden Vorsprungs (36) des Kerns (34) bereitgestellt wird, welcher sich zwischen einem Kernbereich (35), welcher dazu bestimmt ist, eine entsprechende Kerbe bereitzustellen, welche einem Zylinder (20a, 20b) von zwei gegenüberliegenden Zylindern entspricht, und wenigstens einem Formbereich erstreckt, welcher dazu bestimmt ist, den Verbindungsabschnitt (18a, 18b) des Körpers (10) bereitzustellen.

7. Verfahren zum Herstellen eines Körpers (10) eines Scheibenbremsensattels nach Anspruch 6, wobei der Kern (34) dazu eingerichtet ist, die Kerben, welche den gegenüberliegenden Zylindern der Seitenabschnitte (16a, 16b) entsprechen, und jede Seitenlänge (24a, 24b) von jeder Verbindungskanalisation (22) bereitzustellen, welche sich zwischen einem entsprechenden Zylinder (20a, 20b) eines Paares von gegenüberliegenden Zylindern, welche miteinander verbunden werden, und dem entsprechenden Verbindungsabschnitt (18a, 18b) des Körpers (10) erstreckt, wobei jede Seitenlänge (24a, 24b) der Verbindungskanalisationen (22) mittels eines entsprechenden Vorsprungs (36) des Kerns (34) bereitgestellt wird, welcher sich zwischen einem Kernbereich (35), welcher dazu bestimmt ist, eine entsprechende Kerbe bereitzustellen, welche einem Zylinder (20a, 20b) von zwei gegenüberliegenden Zylindern entspricht, und wenigstens einem Formbereich erstreckt, welcher dazu bestimmt ist, den Verbindungsabschnitt (18a, 18b) des Körpers (10) bereitzustellen.

8. Körper (10) eines Scheibenbremsensattels, umfassend Seitenabschnitte (16a, 16b), welche dazu eingerichtet sind, entlang gegenüberliegender Seiten der Scheibe (14) der Scheibenbremse relativ zu einer axialen Richtung (12) der selben Scheibe angeordnet zu sein, und wenigstens einen Verbindungsabschnitt (18a, 18b), welcher die Seitenabschnitte (16a, 16b) miteinander entlang der axialen Richtung (12) verbindet, wobei die Seitenabschnitte (16a, 16b) einen ersten Zylinder (20a) bzw. einen zweiten Zylinder (20b) von wenigstens einem Paar von gegenüberliegenden Zylindern umfassen, welche miteinander mittels einer Verbindungskanalisation (22) verbunden werden, welche sich durch den wenigstens einen Verbindungsabschnitt (18a, 18b) erstreckt,
wobei wenigstens eine Kerbe, welche einem Zylinder (20a, 20b) des Paares von gegenüberliegenden Zylindern entspricht, und wenigstens eine Seitenlänge (24a, 24b) der Verbindungskanalisation (22), welche sich zwischen diesem Zylinder und dem Verbindungsabschnitt (18a, 18b) des Körpers (10) erstreckt, gleichzeitig während eines Schritts eines Gießens des Körpers (10) bereitgestellt werden; umfassend die Seitenlänge (24a) der Verbindungskanalisation (22), welche sich zwischen dem ersten Zylinder (20a) des Paares von gegenüberliegenden Zylindern und dem Verbindungsabschnitt (18a, 18b) des Körpers (10) erstreckt, und die Seitenlänge (24b) der Verbindungskanalisation (22), welche sich zwischen dem zweiten Zylinder (20b) des Paares von gegenüberliegenden Zylindern und dem Verbindungsabschnitt (18a, 18b) des Körpers (10) erstreckt, wobei die Seitenlängen (24a, 24b) während des Schritts eines Gießens des Körpers (10) des Sattels bereitgestellt werden;
wobei der Körper **dadurch gekennzeichnet ist, dass** die Verbindungskanalisation (22) eine einzelne Verbindungslänge (26) umfasst, welche mittels eines Maschinenbohrens bereitgestellt wird, welches die beiden Seitenlängen (24a, 24b) der Verbindungskanalisation (22) miteinander verbindet, erhalten während eines Gießens und sich zwischen jedem Zylinder (20a, 20b) des Paares von gegenüberliegenden Zylindern und dem Verbindungsabschnitt (18a, 18b) des Körpers (10) erstreckend.

9. Körper (10) eines Scheibenbremsensattels nach Anspruch 8, wobei der Körper (10) des Sattels als ein Stück hergestellt ist.

10. Körper (10) eines Scheibenbremsensattels nach Anspruch 9, wobei die Kerben, welche dem Paar von gegenüberliegenden Zylindern (20a, 20b) entsprechen, mittels wenigstens eines Kerns (34) bereitgestellt werden, und wobei die Seitenlängen (24a, 24b) der Verbindungskanalisation (22), welche sich zwischen jedem Zylinder und dem Verbindungsabschnitt (18a, 18b) des Körpers (10) erstrecken, mittels ihrer entsprechender Vorsprünge (36) des Kerns (34) bereitgestellt werden, welche sich zwischen einem Kernbereich (35), welcher dazu bestimmt ist, eine entsprechende Kerbe bereitzustellen, und wenigstens einem Formbereich erstrecken, welcher dazu bestimmt ist, den Verbindungsabschnitt (18a, 18b) des Körpers (10) bereitzustellen.

11. Körper (10) eines Scheibenbremsensattels nach einem der Ansprüche 8 bis 10, wobei die Verbindungskanalisation (22) eine Verbindungslänge (26) umfasst, welche mittels eines Maschinenbohrens bereitgestellt ist.

12. Körper (10) eines Scheibenbremsensattels nach Anspruch 11, wobei die Verbindungslänge (26), welche durch Bohren hergestellt ist, durch den Verbindungsabschnitt (18a, 18b) des Körpers (10) hindurchtritt.

13. Körper (10) eines Scheibenbremsensattels nach Anspruch 8 oder 12, wobei die Verbindungslänge (26), welche durch Bohren hergestellt ist, die beiden Seitenlängen (24a, 24b) der Verbindungskanalisation (22) miteinander verbindet, erhalten während eines Gießens und sich zwischen jedem Zylinder (20a, 20b) und dem Verbindungsabschnitt (18a, 18b) des Körpers (10) erstreckend, und durch sie an ihren entsprechenden Enden hindurchtritt, welche ihren entsprechenden Zylindern gegenüberliegend sind.

14. Körper (10) eines Scheibenbremsensattels nach einem der Ansprüche 11 bis 13, wobei die Seitenabschnitte (16a, 16b) wenigstens zwei erste Zylinder (20a) bzw. wenigstens zwei zweite Zylinder (20b) umfassen, welche wenigstens zwei Paare von gegenüberliegenden Zylindern bilden, wobei wenigstens ein erster Zylinder (20a) eines Seitenabschnitts (16a) mit dem entsprechenden zweiten Zylinder (20b) des gegenüberliegenden Seitenabschnitts (16b) mittels der Verbindungskanalisation (22) verbunden ist, und wobei die Kerben, welche den Zylindern (20a, 20b) der Seitenabschnitte (16a, 16b) entsprechen, mittels wenigstens eines Kerns (34) bereitgestellt sind, und wenigstens die Seitenlänge (24a, 24b) der Verbindungskanalisation (22) mittels eines Vorsprungs (36) des Kerns (34) bereitgestellt ist, welcher sich zwischen einem Kernbereich (35), welcher dazu bestimmt ist, eine Kerbe bereitzustellen, welche einem der gegenüberliegenden Zylinder entspricht, welche miteinander verbunden sind, und wenigstens einem Formbereich erstreckt, welcher dazu bestimmt ist, den Verbindungsabschnitt (18a, 18b) des Körpers (10) bereitzustellen, und/oder wobei die Kerben, welche gegenüberliegenden Zylindern (20a, 20b) der Seitenabschnitte (16a, 16b) entsprechen, mittels wenigstens eines Kerns (34) bereitgestellt sind und beide Seitenlängen (24a, 24b) der gleichen Verbindungskanalisation (22), welche sich zwischen jedem Zylinder (20a, 20b) eines Paares von gegenüberliegenden Zylindern, welche miteinander verbunden sind, und dem Verbindungsabschnitt (18a, 18b) des Körpers (10) erstrecken, mittels eines entsprechenden Vorsprungs (36) des Kerns (34) bereitgestellt sind, welcher sich zwischen einem Kernbereich (35), welcher dazu bestimmt ist, eine entsprechende Kerbe bereitzustellen, welche einem Zylinder (20a, 20b) eines Paares von gegenüberliegenden Zylindern entspricht, welche miteinander verbunden sind, und wenigstens einem Formbereich erstreckt, welcher dazu bestimmt ist, den Verbindungsabschnitt (18a, 18b) des Körpers (10) bereitzustellen, und/oder
wobei der Körper (10) zwei Seitenabschnitte (16a, 16b) und wenigstens zwei Verbindungsabschnitte (18a, 18b) umfasst, und wobei die ersten und zweiten Zylinder (20a, 20b) eines ersten Paares von gegenüberliegenden Zylindern miteinander mittels einer Verbindungskanalisation (22) verbunden sind, welche durch einen Verbindungsabschnitt (18a) des Körpers (10) hindurchtritt, und wobei die ersten und zweiten Zylinder (20a, 20b) eines zweiten Paares von gegenüberliegenden Zylindern miteinander mittels einer weiteren Verbindungskanalisation (22) verbunden sind, welche durch einen verschiedenen Verbindungsabschnitt (18a) des Körpers (10) hindurchtritt.

15. Körper (10) eines Scheibenbremsensattels nach Anspruch 14, wobei die Kerben, welche gegenüberliegenden Zylindern (20a, 20b) entsprechen, mittels eines Kerns (34) bereitgestellt sind, und wenigstens eine der Seitenlängen (24a, 24b) von beiden Verbindungskanalisationen (22), welche sich zwischen jedem Zylinder (20a, 20b) eines Paares von gegenüberliegenden Zylindern, welche miteinander verbunden sind, und dem Verbindungsabschnitt (18a, 18b) des Körpers (10) erstreckt, mittels eines entsprechenden Vorsprungs (36) des Kerns (34) bereitgestellt sind, welcher sich zwischen einem Kernbereich (35), welcher dazu bestimmt ist, eine entsprechende Kerbe bereitzustellen, welche einem Zylinder (20a, 20b) eines Paares von gegenüberliegenden Zylindern entspricht, und wenigstens einem Formbereich erstreckt, welcher dazu bestimmt ist, den Verbindungsabschnitt (18a, 18b) des Körpers (10) bereitzustellen, und/oder
wobei die Kerben, welche gegenüberliegenden Zylindern (20a, 20b) entsprechen, mittels eines Kerns (34) bereitgestellt sind, und jede Seitenlänge (24a, 24b) von entsprechenden Verbindungskanalisationen (22), welche sich zwischen jedem Zylinder (20a, 20b) eines Paares von gegenüberliegenden Zylindern, welche miteinander verbunden sind, und dem Verbindungsabschnitt (18a, 18b) des Körpers (10) erstreckt, mittels eines entsprechenden Vorsprungs (36) des Kerns (34) bereitgestellt ist, welcher sich zwischen einem Kernbereich (35), welcher dazu bestimmt ist, eine entsprechende Kerbe bereitzustellen, welche einem Zylinder (20a, 20b) eines Paares von gegenüberliegenden Zylindern entspricht, und wenigstens einem Formbereich erstreckt, welcher dazu bestimmt ist, den Verbindungsabschnitt (18a, 18b) des Körpers (10) bereitzustellen, und/oder
wobei jede Verbindungskanalisation (22) eine Verbindungslänge (26) umfasst, welche mittels eines Maschinenbohrens bereitgestellt ist, welches ihre entsprechenden beiden Seitenlängen (24a, 24b) der Verbindungskanalisation (22) verbindet, erhalten während eines Gießens und sich zwischen jedem Zylinder (20a, 20b) eines Paares von gegenüberliegenden Zylindern und dem Verbindungsabschnitt (18a, 18b) des Körpers (10) erstreckend, und/oder wobei die Verbindungslänge (26), welche durch Bohren hergestellt wird, durch einen entsprechenden Verbindungsabschnitt (18a, 18b) des Körpers (10) hindurchtritt, und/oder wobei jede Verbindungslänge (26), welche durch Bohren hergestellt wird, die beiden Seitenlängen (24a, 24b) ihrer entsprechenden Verbindungskanalisation (22) miteinander verbindet, erhalten während eines Gießens und sich zwischen jedem Zylinder (20a, 20b) eines Paares von gegenüberliegenden Zylindern und dem Verbindungsbereich (18a, 18b) des Körpers (10) erstreckend und durch sie an ihren entsprechenden Enden hindurchtritt, welche ihren entsprechenden Zylindern gegenüberliegend sind.

## Revendications

1. Procédé de fabrication d'un corps (10) d'un étrier de frein à disque, ledit corps (10) comprenant des parties latérales (16a, 16b) adaptées pour être agencées le long de côtés opposés du disque (14) du frein à disque par rapport à un sens axial (12) du même disque et au moins une partie de raccord (18a, 18b) raccordant les parties latérales (16a, 16b) le long dudit sens axial (12), dans lequel lesdites parties latérales (16a, 16b) comprennent un premier cylindre (20a) et un second cylindre (20b), respectivement, d'au moins une paire de cylindres opposés raccordés l'un à l'autre au moyen d'une canalisation de raccord (22) s'étendant à travers l'au moins une partie de raccord (18a, 18b),
ledit procédé comprenant les étapes consistant à :
- fournir un moule permettant de fabriquer par moulage le corps (10) de l'étrier en moulant un matériau dans le moule ;
- fournir au moins un noyau (34) permettant de fabriquer par moulage un corps (10) d'un étrier de frein à disque comprenant deux zones (35) adaptées pour fournir deux entailles opposées correspondant à deux cylindres (20a, 20b) d'une paire de cylindres opposés du corps raccordés l'un à l'autre au moyen de ladite canalisation de raccord (22), ledit au moins un noyau (34) comprenant en outre deux saillies (36) opposées l'une à l'autre adaptées pour fournir une longueur latérale (24a, 24b) de la canalisation de raccord (22) entre les cylindres opposés ;
- insérer ledit au moins un noyau dans ledit moule ;
- mouler un matériau dans le moule afin de fournir simultanément lesdites entailles correspondant auxdits cylindres (20a, 20b) de la paire de cylindres opposés et lesdites longueurs latérales (24a, 24b) de la canalisation de raccord (22) s'étendant entre ce cylindre et la partie de raccord (18a, 18b) du corps (10) ;
- le forage par machine-outil d'une unique longueur de raccord (26) de la canalisation de raccord (22) fournie de manière consécutive à l'étape de moulage du corps, pour raccorder l'une à l'autre les deux longueurs latérales (24a et 24b) de la canalisation de raccord (22) qui s'étendent entre chaque cylindre de la paire de cylindres opposés et la partie de raccord de corps afin de compléter la canalisation de raccord.

2. Procédé de fabrication d'un corps (10) d'un étrier de frein à disque selon la revendication 1, dans lequel le corps (10) de l'étrier est fabriqué d'un seul tenant par moulage.

3. Procédé de fabrication d'un corps (10) d'un étrier de frein à disque selon la revendication 1 ou 2, dans lequel les deux longueurs latérales (24a, 24b) de la canalisation de raccord (22) qui s'étendent entre chaque cylindre (20a, 20b) de la paire de cylindres opposés et la partie de raccord (18a, 18b) du corps (10) sont ensuite raccordées l'une à l'autre au moyen d'un forage par machine-outil afin de compléter la canalisation de raccord (22), et/ou
dans lequel les deux longueurs latérales (24a, 24b) de la canalisation de raccord (22) qui s'étendent entre chaque cylindre de la paire de cylindres opposés et la partie de raccord (18a, 18b) du corps (10) sont raccordées l'une à l'autre au moyen d'un forage par machine-outil qui traverse la partie de raccord (18a, 18b) du corps (10), et/ou
dans lequel les deux longueurs latérales (24a, 24b) de la canalisation de raccord (22) qui s'étendent entre chaque cylindre de la paire de cylindres opposés et la partie de raccord (18a, 18b) du corps (10) sont raccordées l'une à l'autre au moyen d'un forage par machine-outil qui les traverse au niveau de leurs extrémités respectives opposées à leurs cylindres respectifs.

4. Procédé de fabrication d'un corps (10) d'un étrier de frein à disque selon l'une des revendications précédentes, dans lequel lesdites parties latérales (16a, 16b) comprennent au moins deux premiers cylindres (20a) et au moins deux seconds cylindres (20b), respectivement, formant au moins deux paires de cylindres opposés, dans lequel au moins un premier cylindre (20a) d'une partie latérale (16a) est raccordé à son second cylindre (20b) respectif de la partie latérale (16b) opposée au moyen de ladite canalisation de raccord (22), et dans lequel au moins un noyau (34) est inséré dans ledit moule afin de fournir les entailles correspondant aux cylindres (20a, 20b) des parties latérales (16a, 16b) et ladite au moins une longueur latérale (24a, 24b) de la canalisation de raccord (22), ladite longueur latérale de la canalisation de raccord (22) étant fournie au moyen d'une saillie (36) dudit noyau (34) s'étendant entre une zone de noyau (35) destinée à fournir une entaille correspondant à l'un des cylindres opposés (20a, 20b) raccordés l'un à l'autre et au moins une zone de moule destinée à fournir la partie de raccord (18a, 18b) du corps (10).

5. Procédé de fabrication d'un corps (10) d'un étrier de frein à disque selon la revendication 4, dans lequel au moins un noyau (34) est inséré dans ledit moule afin de fournir les entailles correspondant aux cylindres opposés (20a, 20b) des parties latérales (16a, 16b) et les deux longueurs latérales (24a, 24b) de la canalisation de raccord (22) qui s'étendent entre chaque cylindre (20a, 20b) d'une paire de cylindres opposés, raccordés l'un à l'autre, et la partie de raccord (18a, 18b) du corps (10), chacune desdites longueurs latérales (24a, 24b) étant fournie au moyen d'une saillie (36) respective dudit noyau (34) s'étendant entre une zone de noyau (35) destinée à fournir une entaille respective correspondant à un cylindre (20a, 20b) d'une paire de cylindres opposés, raccordés l'un à l'autre, et au moins une zone de moule destinée à fournir la partie de raccord (18a, 18b) du corps (10).

6. Procédé de fabrication d'un corps (10) d'un étrier de frein à disque selon la revendication 4 ou 5, dans lequel ledit corps (10) comprend deux parties latérales (16a, 16b) et au moins deux parties de raccord (18a, 18b), chaque paire de cylindres opposés (20a, 20b) étant raccordée à l'autre au moyen d'une canalisation de raccord (22) respective traversant une partie de raccord (18a, 18b), et dans lequel ledit au moins un noyau (34) est adapté pour fournir lesdites entailles correspondant aux cylindres opposés des parties latérales (16a, 16b) et au moins une longueur latérale (24a, 24b) de chaque canalisation de raccord (22) s'étendant entre un cylindre (20a, 20b) respectif d'une paire de cylindres opposés raccordés l'un à l'autre et la partie de raccord (18a, 18b) du corps (10), chaque longueur latérale (24a, 24b) de chaque canalisation de raccord (22) étant fournie au moyen d'une saillie (36) respective dudit noyau (34) s'étendant entre une zone de noyau (35) destinée à fournir une entaille respective correspondant à un cylindre (20a, 20b) de deux cylindres opposés et au moins une zone de moule destinée à fournir la partie de raccord (18a, 18b) du corps (10).

7. Procédé de fabrication d'un corps (10) d'un étrier de frein à disque selon la revendication 6, dans lequel ledit noyau (34) est adapté pour fournir lesdites entailles correspondant auxdits cylindres opposés des parties latérales (16a, 16b) et chaque longueur latérale (24a, 24b) de chaque canalisation de raccord (22) s'étendant entre un cylindre (20a, 20b) respectif d'une paire de cylindres opposés raccordés l'un à l'autre et la partie de raccord (18a, 18b) respective du corps (10), chaque longueur latérale (24a, 24b) des canalisations de raccord (22) étant fournie au moyen d'une saillie (36) respective dudit noyau (34) s'étendant entre une zone de noyau (35) destinée à fournir une entaille respective correspondant à un cylindre (20a, 20b) de deux cylindres opposés et au moins une zone de moule destinée à fournir la partie de raccord (18a, 18b) du corps (10).

8. Corps (10) d'un étrier de frein à disque comprenant des parties latérales (16a, 16b) adaptées pour être agencées le long de côtés opposés du disque (14) du frein à disque par rapport à un sens axial (12) du même disque et au moins une partie de raccord (18a, 18b) raccordant les parties latérales (16a, 16b) l'une à l'autre le long dudit sens axial (12), dans lequel lesdites parties latérales (16a, 16b) comprennent un premier cylindre (20a) et un second cylindre (20b), respectivement, d'au moins une paire de cylindres opposés raccordés l'un à l'autre au moyen d'une canalisation de raccord (22) s'étendant à travers l'au moins une partie de raccord (18a, 18b),
dans lequel au moins une entaille correspondant à un cylindre (20a, 20b) de la paire de cylindres opposés et au moins une longueur latérale (24a, 24b) de la canalisation de raccord (22) s'étendant entre ce cylindre et la partie de raccord (18a, 18b) du corps (10) sont simultanément fournies durant une étape de fabrication par moulage du corps (10) ;
comprenant la longueur latérale (24a) de la canalisation de raccord (22) s'étendant entre le premier cylindre (20a) de la paire de cylindres opposés et la partie de raccord (18a, 18b) du corps (10), et la longueur latérale (24b) de la canalisation de raccord (22) s'étendant entre le second cylindre (20b) de la paire de cylindres opposés et la partie de raccord (18a, 18b) du corps (10), dans lequel lesdites longueurs latérales (24a, 24b) sont fournies durant l'étape de fabrication par moulage du corps (10) de l'étrier ;
dans lequel le corps est **caractérisé en ce que** la canalisation de raccord (22) comprend une unique longueur de raccord (26) fournie au moyen d'un forage par machine-outil raccordant l'une à l'autre les deux longueurs latérales (24a et 24b) de la canalisation de raccord (22), obtenues lors du moulage et s'étendant entre chaque cylindre (20a, 20b) de la paire de cylindres opposés et la partie de raccord (18a, 18b) du corps (10).

9. Corps (10) d'un étrier de frein à disque selon la revendication 8, dans lequel le corps (10) de l'étrier est fabriqué d'un seul tenant.

10. Corps (10) d'un étrier de frein à disque selon la revendication 9, dans lequel lesdites entailles correspondant à ladite paire de cylindres opposés (20a, 20b) sont fournies au moyen d'au moins un noyau (34) et dans lequel lesdites longueurs latérales (24a, 24b) de la canalisation de raccord (22) qui s'étendent entre chaque cylindre et la partie de raccord (18a, 18b) du corps (10) sont fournies au moyen de leurs saillies (36) respectives dudit noyau (34) qui s'étendent entre une zone de noyau (35) destinée à fournir une entaille respective et au moins une zone de moule destinée à fournir la partie de raccord (18a, 18b) du corps (10).

11. Corps (10) d'un étrier de frein à disque selon l'une des revendications 8 à 10, dans lequel ladite canalisation de raccord (22) comprend une longueur de raccord (26) fournie au moyen d'un forage par machine-outil.

12. Corps (10) d'un étrier de frein à disque selon la revendication 11, dans lequel ladite longueur de raccord (26) fabriquée par forage traverse la partie de raccord (18a, 18b) du corps (10).

13. Corps (10) d'un étrier de frein à disque selon la revendication 8 ou 12, dans lequel ladite longueur de raccord (26) fabriquée par forage raccorde l'une à l'autre les deux longueurs latérales (24a et 24b) de la canalisation de raccord (22), obtenues lors du moulage et s'étendant entre chaque cylindre (20a, 20b) et la partie de raccord (18a, 18b) du corps (10) et les traverse au niveau de leurs extrémités respectives opposées à leurs cylindres respectifs.

14. Corps (10) d'un étrier de frein à disque selon l'une des revendications 11 à 13, dans lequel lesdites parties latérales (16a, 16b) comprennent au moins deux premiers cylindres (20a) et au moins deux seconds cylindres (20b), respectivement, formant au moins deux paires de cylindres opposés, dans lequel au moins un premier cylindre (20a) d'une partie latérale (16a) est raccordé au second cylindre (20b) correspondant de la partie latérale (16b) opposée au moyen de ladite canalisation de raccord (22), et dans lequel les entailles correspondant aux cylindres (20a, 20b) des parties latérales (16a, 16b) sont fournies au moyen d'au moins un noyau (34) et au moins ladite longueur latérale (24a, 24b) de la canalisation de raccord (22) est fournie au moyen d'une saillie (36) dudit noyau (34) s'étendant entre une zone de noyau (35) destinée à fournir une entaille correspondant à l'un des cylindres opposés, raccordés l'un à l'autre, et au moins une zone de moule destinée à fournir la partie de raccord (18a, 18b) du corps (10), et/ou dans lequel les entailles correspondant aux cylindres opposés (20a, 20b) des parties latérales (16a, 16b) sont fournies au moyen d'au moins un noyau (34) et les deux longueurs latérales (24a, 24b) de la même canalisation de raccord (22) qui s'étendent entre chaque cylindre (20a, 20b) d'une paire de cylindres opposés, raccordés l'un à l'autre, et la partie de raccord (18a, 18b) du corps (10) sont fournies au moyen d'une saillie (36) respective dudit noyau (34) s'étendant entre une zone de noyau (35) destinée à fournir une entaille respective correspondant à un cylindre (20a, 20b) d'une paire de cylindres opposés, raccordés l'un à l'autre, et au moins une zone de moule destinée à fournir la partie de raccord (18a, 18b) du corps (10), et/ou
dans lequel ledit corps (10) comprend deux parties latérales (16a, 16b) et au moins deux parties de raccord (18a, 18b), et dans lequel les premier et second cylindres (20a, 20b) d'une première paire de cylindres opposés sont raccordés l'un à l'autre au moyen d'une canalisation de raccord (22) traversant une partie de raccord (18a) du corps (10) et dans lequel les premier et second cylindres (20a, 20b) d'une seconde paire de cylindres opposés sont raccordés l'un à l'autre au moyen d'une canalisation de raccord (22) supplémentaire traversant une partie de raccord (18a) différente du corps (10).

15. Corps (10) d'un étrier de frein à disque selon la revendication 14, dans lequel les entailles correspondant aux cylindres opposés (20a, 20b) sont fournies au moyen d'un noyau (34) et au moins l'une des longueurs latérales (24a, 24b) des deux canalisations de raccord (22) s'étendant entre chaque cylindre (20a, 20b) d'une paire de cylindres opposés, raccordés l'un à l'autre, et la partie de raccord (18a, 18b) du corps (10) sont fournies au moyen d'une saillie (36) respective dudit noyau (34) s'étendant entre une zone de noyau (35) destinée à fournir une entaille respective correspondant à un cylindre (20a, 20b) d'une paire de cylindres opposés et au moins une zone de moule destinée à fournir la partie de raccord (18a, 18b) du corps (10) et/ou
dans lequel les entailles correspondant aux cylindres opposés (20a, 20b) sont fournies au moyen d'un noyau (34) et chaque longueur latérale (24a, 24b) des canalisations de raccord (22) respectives s'étendant entre chaque cylindre (20a, 20b) d'une paire de cylindres opposés, raccordés l'un à l'autre, et la partie de raccord (18a, 18b) du corps (10) est fournie au moyen d'une saillie (36) respective dudit noyau (34) s'étendant entre une zone de noyau (35) destinée à fournir une entaille respective correspondant à un cylindre (20a, 20b) d'une paire de cylindres opposés et au moins une zone de moule destinée à fournir la partie de raccord (18a, 18b) du corps (10), et/ou
dans lequel chaque canalisation de raccord (22) comprend une longueur de raccord (26) fournie au moyen d'un forage par machine-outil raccordant ses deux longueurs latérales (24a, 24b) respectives de la canalisation de raccord (22) obtenues lors du moulage et s'étendant entre chaque cylindre (20a, 20b) d'une paire de cylindres opposés et la partie de raccord (18a, 18b) du corps (10), et/ou dans lequel ladite longueur de raccord (26) fabriquée par forage traverse une partie de raccord (18a, 18b) respective du corps (10), et/ou
dans lequel chaque longueur de raccord (26) fabriquée par forage raccorde l'une à l'autre les deux longueurs latérales (24a, 24b) de sa canalisation de raccord (22) respective, obtenues lors du moulage et s'étendant entre chaque cylindre (20a, 20b) d'une paire de cylindres opposés et la partie de raccord (18a, 18b) du corps (10) et les traverse au niveau de leurs extrémités respectives opposées à leurs cylindres respectifs.
